# EUROPEAN PATENT SPECIFICATION

(11) **EP 4 325 325 B1**
(45) Date of publication and mention of the grant of the patent: **12.03.2025**
(21) Application number: 23183147.0
(22) Date of filing: 03.07.2023
(51) Int. Cl.: G05D 23/22, G05D 23/19, C03B 29/00, F27D 19/00, G05B 15/02

(54) **A METHOD FOR HEATING GLASS SHEETS**
EIN VERFAHREN ZUM ERHITZEN VON GLASSCHEIBEN
UNE MÉTHODE POUR CHAUFFER DES PLAQUES DE VERRE

(30) Priority: 19.08.2022 IT 202200017418
(43) Date of publication of application: 21.02.2024
(73) Proprietor: Mazzaroppi Engineering S.r.l., 00134 Roma (IT)
(72) Inventor: Mazzaroppi, Antonio, 00134 ROMA (IT)
(74) Representative: Perronace, Andrea

(56) References cited:
- EP-B1- 0 241 356
- EP-B1- 1 981 820
- US-A- 3 295 843
- US-A- 3 744 985

## Description

The present invention relates to a method for heating glass sheets.

### Background art

The process of glass tempering is a heat treatment which heats a glass sheet at a temperature of about 600° to 700°, quickly followed by forced cooling. This treatment generates a crystalline reconstruction process of the glass, differentiating the outer surface structure from the inner one. This makes the surface of the tempered glass sheet about six times more resistant to stresses than non-tempered glass. Moreover, in the event of an accident and breakage, tempered glass sheets crumble into small pieces and do not result in sharp fragments which cause wounds and injuries. A further advantage of tempered glass is the immutability thereof to high changes in temperature (from 100 to 200°C according to the thickness), while a non-tempered glass sheet breaks due to sudden changes in temperature between 50 and 100°C.

To date, modern glass tempering processes, or more generally processes for the heat treatment of glass, require a continuous heating of the glass sheets. In general, the glass sheet is slid over rollers and heated by means of a furnace or electric resistors arranged above and below the glass until it reaches the desired temperature. However, this type of process requires a significant use of energy because it is necessary to reach high temperatures and maintain these temperatures over the whole sheet surface for long periods of time until the minimum temperature of a portion is at least sufficient. The process thus faces power supply peaks, with significant energy supply costs.

Moreover, a further disadvantage of modern heat treatment processes is due to the fact that the glass sheets are heated uniformly at the same temperature over the whole sheet surface. This causes part of the power supplied to the system being wasted because different regions of the sheet reach the tempering temperatures before others and do not require a continuous heat supply.

Patent document EP0241356 A describes a device and process for heating glass sheets in horizontal position, for bending them or tempering them, by means of two series of resistors, the series being distributed over both sides of the path followed by the sheet and over a portion of the length of this path. Each resistor set is distributed in longitudinal zones or transverse sub-zones varying in width along the longitudinal zones, the power supplied to each longitudinal zone being adjusted irrespective of the power supplied to the other longitudinal zones and being distributed in a controlled manner between the transverse zones and the longitudinal zones. However, such an adjustment is specific to the individual zones and does not keep the total maximum power under control, which can increase with no limits.

Therefore, the need is felt to find a glass sheet heating method which saves energy avoiding power supply peaks while delivering heat to the sheets only in the regions in which an increase in temperature is required, thus remedying the shortcomings of the prior art.

### Purpose and object of the invention

It is the object of the present invention to provide a method which entirely or partly solves the above problems and overcomes the drawbacks of the prior art.

The present invention relates to a method for heating glass sheets, according to the appended claims.

The present invention further relates to an apparatus for heating glass sheets which implements the method of the invention, according to the appended claims.

### Detailed description of embodiments of the invention

### List of figures

The invention will now be described by way of non-limiting illustration, with particular reference to the figures in the accompanying drawings, in which:
- Fig. 1 shows an exemplary diagram of a glass sheet sliding along sliding means (rollers) with the presence of an array of cells, according to an aspect of the invention;
- Fig. 2 shows a method for heating the glass sheets, according to an aspect of the invention;
- Fig. 3 shows a graph of the trend of power (P) as a function of time (t) for glass heating methods of the prior art (dashed line) and for the glass heating method according to the invention (solid line); and
- Fig. 4 shows an exemplary graph of the trend of power (kW) and temperature (C°) of the furnace and glass as a function of time (s) for the glass heating method according to the invention.

It is here specified that elements of different embodiments can be combined together to provide further embodiments without restrictions while respecting the technical concept of the invention, as those ordinarily skilled in the art effortlessly understand from the description.

The present description further relates to the prior art for the implementation thereof, concerning the detail features not described, such as elements of minor importance usually used in the prior art in solutions of the same type, for example.

When an element is introduced, it always means that there can be "at least one" or "one or more".

When a list of elements or features is given in this description, it means that the finding according to the invention "comprises" or alternatively "consists of" such elements.

When listing features within the same sentence or bullet list, one or more of the individual features can be included in the invention without connection with the other features in the list.

Two or more of the parts (elements, devices, systems) described below can be freely associated and considered as part kits according to the invention.

### Embodiments

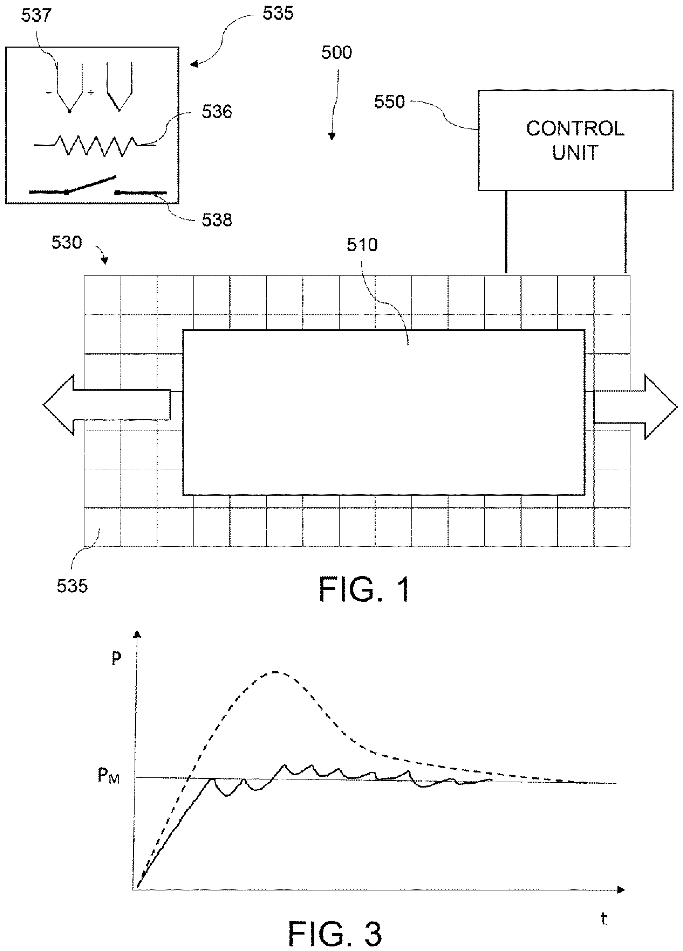

With reference to Fig. 1, an embodiment of the invention comprises an apparatus 500 for heating one or more glass sheets 510. The apparatus 500 is adapted and configured to heat one or more glass sheets in series while simultaneously monitoring the supplied power and the energy consumption.

The apparatus 500 can comprise sliding means (not shown in the figure), such as a set of rollers positioned in series, for example, for one or more glass sheets 510 to slide. The one or more glass sheets 510 comprise a first face and a second face, opposite to said first face. In an advantageous embodiment of the invention, the sliding means can move forward and backward in a preferred sliding direction. The sliding means can be partially arranged inside a furnace (not shown in the figure) so as to slide one glass sheet forward and backward, i.e., inside and outside the furnace.

The apparatus 500 also comprises a control unit 550 for controlling the heating operations of the one or more glass sheets and for monitoring and optionally controlling the sliding of the sheets on the sliding means, as described in detail below.

The apparatus 500 further comprises one or more heating and monitoring arrays 530 arranged facing the first or second face of the one or more glass sheets, as shown in Fig. 1. Optionally, the one or more heating and monitoring arrays 530 can be arranged above and/or below the one or more glass sheets 510 so as to comprise and contain the whole sheet surface during the sliding. The one or more arrays 530 can comprise *N* cells 535 arranged in a grid, where *N* is an integer greater than or equal to two. Each cell 535 can in turn comprise heating means 536, e.g., a resistor crossed by electric current, at least one temperature sensor 537, e.g., a thermocouple, actuation means 538 of the heating means, and optionally a power regulator or reducer (not shown), e.g., a static relay. In an advantageous embodiment of the invention, the temperature sensor 537 in each cell 535 is positioned so that when the glass sheet is at cell 535, the temperature sensor is close to the one or more glass sheets. The cells 535 can be of different shapes and size, can have a mutually equal geometry, or can have a different geometry from one another. In a preferred embodiment of the invention, the cells 535 are equal to one another, square-shaped and arranged to form a grid, as shown in Fig. 1, for example. Advantageously, each cell 535 can both monitor the temperature on the portion of area it covers (e.g., a portion of glass which is instantaneously at the cell) through the temperature sensor, and increase or decrease the temperature on the same portion by switching ON and OFF the heating means upon command of the control unit 550 through the actuation means 538 of the heating means.

In an advantageous embodiment of the invention, the control unit 550 is connected to each cell of the array 530 and can thus monitor the changes in temperature on each cell; moreover, it can increase or decrease the temperature on each cell by switching ON or OFF the corresponding heating means 536 through the actuation means of the heating means 538. The control unit 550 can also monitor and control the power supplied to each cell 535 by setting a maximum limit of power supply, and thus of consumption, per single cell.

It is apparent from the above description that the apparatus 500 can monitor the temperature of a glass sheet in an accurate and targeted manner in the different regions of the sheet surface which are covered by the cells 535. As many temperature measurements *Tᵢ* as the number *N* of cells 535 can be obtained, where *N* is a positive integer. Moreover, the apparatus 500 can increase or decrease the temperature in a targeted manner on the different regions of the sheet surface by switching ON or OFF the heating means 536 corresponding to the cell covering the region of interest. Generally, as mentioned above, the power supplied to each cell can be monitored and controlled by the control unit 550 so that the consumption of energy is kept stable and does not exceed a given preset value *P_{MAX}.*

When reference is made below to a physical quantity such as the temperature value of a cell or the power supply measurement of apparatus 500, for example, it means a range of uncertainty in which the physical quantity is contained. Moreover, when it is said that a first physical quantity is equal to a second physical quantity, it means that the range of uncertainty of said first physical quantity falls within the range of uncertainty of said second physical quantity, as known to the those ordinarily skilled in the art.

According to an aspect of the invention, the above apparatus 500 can be used in a method 100 for heating glass sheets.

According to an embodiment of the invention, the method 100 for heating glass sheets allows efficiently heating one or more glass sheets in a glass heating furnace while optimizing the use of energy and simultaneously limiting an excessive supply of power.

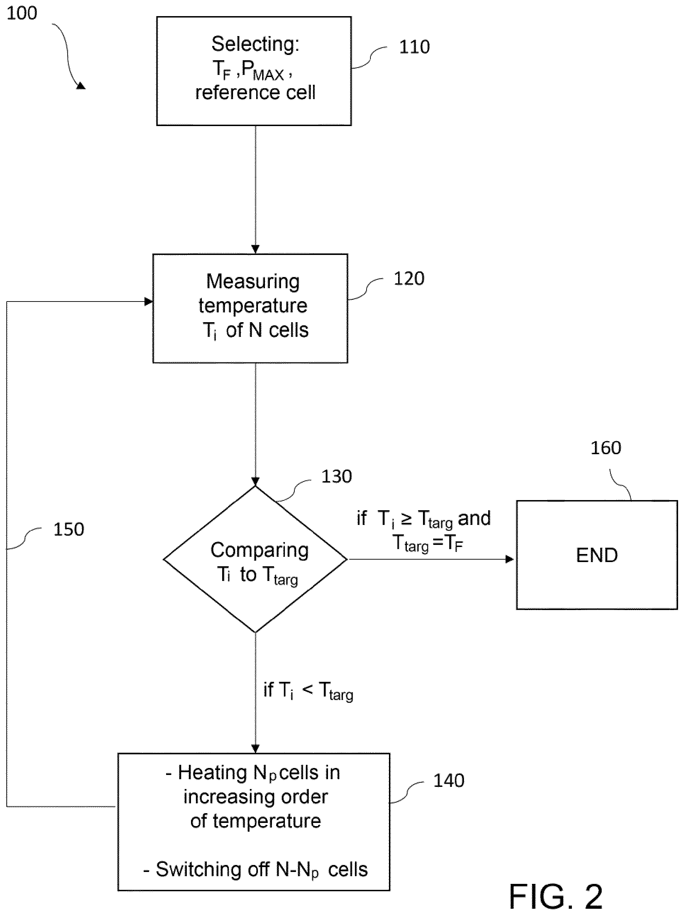

The method 100 for heating one or more glass sheets 510 comprises different steps, as shown in Fig. 2. Specifically, Fig. 2 shows, by way of example, the different steps of the method while making reference to a single glass sheet, however as mentioned above, the glass sheet heating method can be used for one or more glass sheets.

In a step 110: the control unit 550 optionally starts the sliding means which slide the glass sheets 510 forward and backward (or also only forward) in the furnace. In this step, the control unit 550 sets a final temperature *T_{F}* to which to heat the glass sheets, a maximum value of power *P_{MAX}* to be globally supplied to the one or more arrays 530, and a number of cells *N*' to be monitored between the *N* cells, where the *N'* cells comprise at least the cells covering the one or more glass sheets. In an advantageous embodiment of the invention, the *N*' cells can further comprise contiguous cells covering the surface of the glass and they can be equal in number to the *N* cells 535, i.e., *N'=N.*

Which cells belong to the N' cells can be determined cycle by cycle because it is possible to know where the glass sheet is either by means of temperature sensors or by means of a numerical control of the rollers.

Optionally, a first reference cell of the N'cells can be selected, by means of the control unit, where the temperature of the first reference cell is taken as the reference temperature *T_{tαrg}* and where the heating means 536 of the first reference cell are always switched ON in steps 120 to 150 of the method 100. In an embodiment of the invention, just as many reference cells can be selected as the heating and monitoring arrays are, or even more reference cells for each array (in this case, the N'cells of the array will be divided, assigning a sub-group to each reference cell, the final temperature *T_{F}* however always being the same optionally within a tolerance of 10°C, for example).

In a step 120, the control unit acquires, for at least one of the one or more arrays 530, a measurement of the temperature *Tᵢ* from the at least one temperature sensor 537 of the i-th cell for *i* = 1,..., *N*'. Should each cell 535 comprise two or more temperature sensors 537, the measurement of temperature *Tᵢ* is given by the average of the temperature measurements acquired by the two or more temperature sensors.

The temperature measurement, taken by the temperature sensor 537, occurs in a preset time interval which depends on the thickness and type of the glass sheets. For example, the measurement range for white float glass sheets with a thickness of 4 mm is between 140 and 200 seconds, e.g., 160 seconds. The measurement range for glass sheets with 0.01 emissivity is about 60 seconds for each mm of sheet thickness.

Optionally, if a first reference cell was set in the preceding step 110, the temperature measurements *Tᵢ* comprise the reference temperature measurement *T_{targ}.*

In a step 130, the control unit 550 compares the temperature measurements *Tᵢ* acquired in step 120 to the final temperature *T_{F}* set in step 110 and performs the following sub-steps:
- if temperature *Tᵢ* of each cell 535 is greater than or equal to the final temperature *T_{F},* performing step 160; or
- if at least one temperature *Tᵢ* of the cells 535 is lower than the final temperature *T_{F},* performing step 140.

Optionally, if a first reference cell was set in step 110, the control unit 550 compares the temperature measurements *Tᵢ* of step 120 to the reference temperature measurement *T_{targ}* and performs the following sub-steps:
- if the temperature *Tᵢ* of each cell 535 is greater than or equal to the reference temperature *T_{targ}* and if the reference temperature *T_{targ}* is equal to the final temperature *T_{F},* performing step 160; or
- if at least one temperature *Tᵢ* of the cells 535 is lower than the reference temperature *T_{targ},* performing step 140.

In step 140, upon command of the control unit 550 to the actuation means 538, the heating means 536 are switched ON for a number *Nₚ ≥* 0 of the N'cells, where *Nₚ* ≤ *N',* the *Nₚ* cells being determined so that:
- the heating means of the *Nₚ* cells develop power not greater than the maximum power *P_{MAX}* of step 110;
- the *Nₚ* cells have temperatures *Tᵢ* lower than the final temperature *T_{F}* among the N'cells 535.

Optionally, if a first reference cell was set in step 110 upon command of the control unit 550 to the actuation means 538, the heating means 536 are switched ON for a number *Nₚ* ≥ 0 of the *N*' cells, where *Nₚ* ≤ *N',* the *Nₚ* cells being determined so that:
- the heating means of the *Nₚ* cells develop power not greater than the maximum power *P_{MAX}* of step 110;
- the *Nₚ* cells have temperatures *Tᵢ* lower than the reference temperature *T_{targ}* among the N'cells 535.

Moreover, in this step 140, the heating means 536 of the remaining *N*'-*Nₚ* cells are switched OFF upon command of the control unit 550 to said actuation means 538. As mentioned above, *Nₚ* is selected as a function of the value of the maximum power *P_{MAX}* preset in step 110 so that the power globally supplied to apparatus 500 does not exceed *P_{MAX}.*

Subsequently to step 140, the control unit 550 performs 150 step 120 again.

In step 160, the method 100 for heating the one or more glass sheets 510 by of the control unit 550 ends. The sheet 510 leaves the furnace and is quickly cooled in a short time interval, as known from the prior art.

Optionally, as mentioned above, in method 100 it is possible to set a second reference cell with a reference temperature *T_{targ2}*, where said heating means 536 of the second reference cell are always ON during steps 120 to 150, and where in step 130, the temperature measurements *Tᵢ* are compared to *T_{targ}* and *T_{targ2}* based on a proximity subdivision and the *Nₚ* cells emerge from the overall comparison or are compared to an average of the temperatures *T_{targ}* and *T_{targ2}.*

The time taken by the method 100 to go from step 120 to step 140 is referred to as the cycle time. In an advantageous embodiment of the invention, the method 100 can perform several cycle times so as to keep the consumption of power of the apparatus 500 limited while increasing the overall time for heating a glass sheet. In a preferred embodiment of the invention, the cycle time is predetermined and has a duration of a few seconds, for example. In an alternative embodiment of the invention, the cycle time can vary.

In a further advantageous embodiment of the invention, two heating and monitoring arrays 530 can be used, arranged facing the first and second faces of the glass sheet 510, respectively, where steps 120 to 150 can be performed on at least one of the two heating and monitoring arrays 530.

In a particularly advantageous embodiment of the invention, steps 120 to 150 of the method 100 can be performed simultaneously on both the two heating and monitoring arrays.

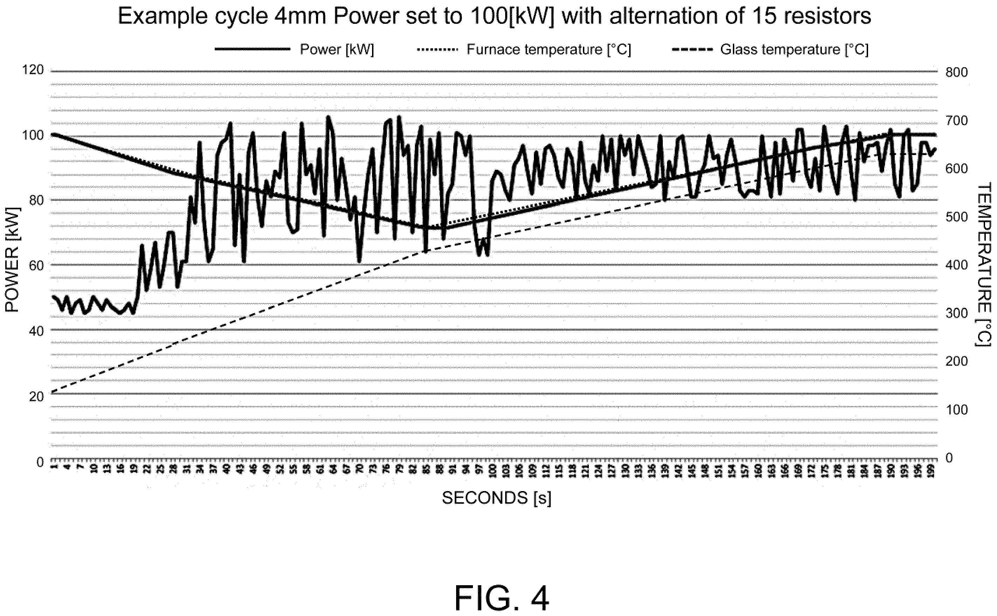

Fig. 4 shows an exemplary graph of the method 100 for heating a glass sheet. The graph shows the trend of power (kW) and temperature (C°) as a function of time (s). The dashed line in the figure shows the temperature trend of the glass sheet 510 which increases over time, the dotted line shows the temperature trend of the furnace in which the sheet is, and the solid line shows the trend of the power supplied to the heating and monitoring array 530 over time. In the exemplary graph shown in the figure, the glass sheet reaches a final temperature *T_{F}* between 600 and 700 C°, e.g., a final temperature *T_{F}* of about 650C°. After a first initial setting step (from 0 to about 30 seconds), the supplied power constantly oscillates from a minimum value of about 60 kW to a maximum value *P_{MAX}* of about 100 kW. There was a total of about 40 cells in the example and always 15 among the furthest ones from the final temperature were switched ON.

In a further embodiment of the method 100 according the invention, each i-th cell of the *N* cells 535 comprises a power reducer (not shown) configured to be actuated by the control unit 550 and to reduce the switching ON time of the heating means 536 to a percentage *TPᵢ* during the time interval between the start of step 120 and the end of step 140. In this case, the *Nₚ* cells and the percentages *TPᵢ* are determined within intervals corresponding to the following conditions:
- the higher the switching ON percentage *TPᵢ,* the lower the temperature *Tᵢ* with respect to the final temperature *T_{F}* in the group of N'cells 535;
- the overall power of the *Nₚ* cells is not greater than the maximum power *P_{MAX};* and
- the *Nₚ* cells have temperatures *Tᵢ* lower than the final temperature *T_{F}* among the N'cells 535.

The percentages *TPᵢ* can thus be accurately determined with an optimization algorithm of the heating cycle of the glass sheets based on techniques known to those skilled in the art. In particular, it is possible to place a further condition on the maximum overall heating time of the one or more glass sheets to optimize the variables *Nₚ* and *TP_{i.}*

### Advantages of the invention

The apparatus 500 and the method 100 for heating glass sheets have several advantages as compared to the technologies of the prior art.

Firstly, the method according to the invention allows heating glass sheets in a targeted and accurate manner by supplying heat only to the regions of the sheet in which it is required and eliminating or decreasing the heat supply in the regions in which the temperature is sufficiently close to the final temperature *T_{F}.* It is thus possible to avoid wasting energy by limiting consumption.

Another advantage provided by the apparatus 500 and the method 100 according to the invention is that the supply of power required for heating a glass sheet can be limited while advantageously decreasing the costs of systems and works in order to supply high power energy. By way of example, Fig. 3 shows a graph of power (P) vs. time (t) which compares the trend of the supplied power in the methods for heating glass of the prior art (dashed line) to the trend of the supplied power in the method 100 according to the invention (continuous line). It is apparent from the graph how the supplied power in the method 100 oscillates at each cycle time around the maximum preset power value *P_{MAX},* while the supplied power in the prior art methods follows a bell-shaped trend, with a significant peak in power.

Yet another advantage of the method according to the invention is the glass quality on the edges of the glass sheets: by limiting an excessive heating of the glass edges, overheating imperfections are avoided.

## Claims

1. A method (100) for heating one or more glass sheets (510) with a first face and a second face, opposite to said first face, in a glass heating furnace, comprising the use of:
- one or more heating and monitoring arrays (530) of the one or more glass sheets in said furnace, each of the one or more arrays (530) being placed facing said first or said second face and comprising *N* cells (535), with *N* being an integer greater than or equal to two, wherein each cell (535) of the *N* cells comprises heating means (536), at least one temperature sensor (537) positioned so that when the glass sheet is in a position corresponding to said cell, the temperature sensor is close to said one or more glass sheets, and actuation means (538) of the heating means as well;
- a control unit (550) connected to said one or more heating and monitoring arrays (530) for controlling and monitoring the heating of each of said *N* cells (535) of each of the one or more arrays (530);
**characterized in that** it comprises performing the following steps:
A. setting (110), by means of the control unit (550):
- a final temperature *T_{F}* to heat the one or more glass sheets (510);
- a maximum power value *P_{MAX}* to be globally supplied to the one or more arrays (530);
- a number of cells *N'* to be monitored among said *N* cells, the *N*' cells comprising at least a number of cells which cover said one or more glass sheets;
B. acquiring (120), by the control unit (550), for at least one of the one or more arrays, a temperature measurement *Tᵢ* from said at least one temperature sensor (537) of the *i*-th cell for *i* = 1,..., *N*', which is instantaneously in front of said one or more glass sheets;
C. comparing (130), by the control unit (550), the temperature measurements *Tᵢ* of step B with the final temperature *T_{F}* of step A and performing the following sub-steps:
- if the temperature *Tᵢ* of each cell (535) is greater than or equal to the final temperature *T_{F},* performing step G; or
- if at least one temperature *Tᵢ* of the cells (535) is lower than the final temperature *T_{F},* performing step D;
D. switching on (140), for said at least one of the one or more arrays, upon command of the control unit (550) to said actuation means (538), the heating means (536) of a number *Nₚ* ≥ 1 of said *N*'cells, where *Nₚ < N',* the *Nₚ* cells being determined so that:
- the heating means of the *Nₚ* cells develop an overall power which is not greater than the maximum power *P_{MAX}* of step A;
- the *Nₚ* cells have temperatures *Tᵢ* lower than the final temperature *T_{F}* among the *N*' cells (535);
E. switching off (140), for said at least one of the one or more arrays, upon command of the control unit (550) to said actuation means (538), the heating means (536) of the *N'-Nₚ* remaining cells with respect to step D;
F. performing (150) step B again upon command of the control unit (550); and
G. terminating (160), by the control unit (550), the heating method (100) of the one or more glass sheets (510),
wherein:
- in step A, a first reference cell of said *N*' cells (535) is set, wherein the instantaneous temperature of the first reference cell is assumed as reference temperature *T_{tαrg}* and wherein said heating means (536) of the first reference cell are always ON during steps B-F;
- in step C, the temperature measurements *Tᵢ* are compared by the control unit (550) to the reference temperature *T_{targ}* and the following sub-steps are performed:
▪ if the temperature *Tᵢ* of each cell (535) is greater than or equal to the reference temperature *T_{targ}* and if the reference temperature *T_{targ}* is greater than or equal to the final temperature *T_{F}* of step A, performing step G; or
▪ if at least one temperature *Tᵢ* of the cells (535) is lower than the reference temperature *T_{targ},* performing step D;
- in step D, said *Nₚ* cells are determined so that:
▪ the heating means of the *Nₚ* cells supply an overall power which is not greater than the maximum power *P_{MAX}* of step A;
▪ the *Nₚ* cells have temperatures *Tᵢ* lower than the reference temperature *T_{targ}* among the *N'* cells (535),
and wherein a second reference cell with a reference temperature *T_{targ2}* is set, wherein said heating means (536) of the second reference cell are always ON during steps B-F, and wherein in step C, the temperature measurements *Tᵢ* are compared to *T_{targ}* and *T_{targ2}* based on a proximity subdivision and the *Nₚ* cells emerge from the overall comparison or are compared to an average of the temperatures *T_{targ}* and *T_{targ2}*.

2. A method according to claim 1, wherein a single heating and monitoring array (530) is used.

3. A method according to claim 1 or 2, wherein two heating and monitoring arrays (530) are used, arranged facing said first face and said second face of the glass sheet, respectively, wherein steps B-F are performed on at least one of said two heating and monitoring arrays (530).

4. A method according to claim 3, wherein steps B-F are performed simultaneously on both of said two heating and monitoring arrays (530).

5. A method according to one or more of claims 1 to 4, wherein the time interval between the start of step B and the end of step E is a predetermined cycle time.

6. A method according to one or more of claims 1 to 5, wherein the *N*' cells comprise the contiguous cells which cover the surface of the glass.

7. A method according to one or more of claims 1 to 6, wherein *N'=N.*

8. A method according to one or more of claims 1 to 7, wherein each i-th cell comprises a power reducer configured to be actuated by the control unit (550) and to reduce the switching ON time of the heating means (536) to a percentage *TPᵢ* during the time interval between the start of step B and the end of step E, and wherein the *Nₚ* cells and the percentages *TPᵢ* are determined within intervals corresponding to the following conditions:
- the higher the switching ON percentage *TPᵢ,* the lower the temperature *Tᵢ* with respect to the final temperature *T_{F}* in the group of *N*' cells (535);
- the overall power of the *Nₚ* cells is not greater than the maximum power *P_{MAX}*; and
- the *Nₚ* cells have temperatures *Tᵢ* lower than the final temperature *T_{F}* among the *N*' cells (535).

9. A method according to claim 8, wherein the *Nₚ* cells and the percentages *TPᵢ* are also determined on the basis of a maximum overall heating time of the one or more glass sheets.

10. An apparatus (500) for heating one or more glass sheets (510), comprising a furnace for heating glass and:
- one or more heating and monitoring arrays (530) of the one or more glass sheets in said furnace, each of the one or more arrays (530) being placed facing said first face or said second face and comprising *N* cells (535), with *N* being an integer greater than or equal to two, wherein each cell (535) of the *N* cells comprises heating means (536), at least one temperature sensor (537) positioned so that when the glass sheet is in a position corresponding to said cell, the temperature sensor is close to said one or more glass sheets, and actuation means (538) of the heating means as well;
- a control unit (550) connected to said one or more heating and monitoring arrays (530) for controlling and monitoring the heating of each of said *N* cells (535) of each of the one or more arrays (530);
the apparatus being **characterized in that** the control unit is configured to perform steps A to G according to one or more of claims 1 to 9.

## Patentansprüche

1. Verfahren (100) zum Erhitzen einer oder mehrerer Glasscheiben (510) mit einer ersten Fläche und einer der ersten Fläche gegenüberliegenden zweiten Fläche in einem Glasheizofen, umfassend die Verwendung von:
- einer oder mehreren Heiz- und Überwachungsanordnungen (530) der einen oder mehreren Glasscheiben in dem Ofen, wobei jede der einen oder der mehreren Anordnungen (530) gegenüber der ersten oder der zweiten Fläche angeordnet ist und *N* Zellen (535) umfasst, wobei *N* eine Ganzzahl größer oder gleich zwei ist, wobei jede Zelle (535) der *N* Zellen Heizmittel (536), mindestens einen Temperatursensor (537), der so positioniert ist, dass sich der Temperatursensor nahe der einen oder der mehreren Glasscheiben befindet, wenn sich die Glasscheibe in einer Position befindet, die der Zelle entspricht, sowie Betätigungsmittel (538) der Heizmittel umfasst;
- eine Steuereinheit (550), die mit der einen oder den mehreren Heiz- und Überwachungsanordnungen (530) verbunden ist, zum Steuern und Überwachen des Erhitzens jeder der *N* Zellen (535) einer jeden der einen oder der mehreren Anordnungen (530);
**dadurch gekennzeichnet, dass** es das Durchführen der folgenden Schritte umfasst:
A. Einstellen (110) mittels der Steuereinheit (550):
- einer Endtemperatur *T_{F},* um die eine oder die mehreren Glasscheiben (510) zu erhitzen;
- eines maximalen Leistungswerts *P_{MAX},* der der einen oder den mehreren Anordnungen (530) global zugeführt werden soll;
- einer Anzahl von Zellen *N',* die unter den *N* Zellen überwacht werden sollen, wobei die *N'* Zellen mindestens eine Anzahl von Zellen umfassen, die die eine oder mehreren Glasplatten abdecken;
B. Erfassen (120), durch die Steuereinheit (550) für mindestens einen der einen oder der mehreren Anordnungen, einer Temperaturmessung *Tᵢ* von dem mindestens einen Temperatursensor (537) der *i*-ten Zelle für *i* = 1,..., *N',* die sich momentan vor der einen oder den mehreren Glasscheiben befindet;
C. Vergleichen (130), durch die Steuereinheit (550), der Temperaturmessungen *Tᵢ* von Schritt B mit der Endtemperatur *T_{F}* von Schritt A und Durchführen der folgenden Teilschritte:
- wenn die Temperatur *Tᵢ* jeder Zelle (535) größer oder gleich der Endtemperatur *T_{F}* ist, Durchführen des Schritts G oder
- mindestens eine Temperatur *Tᵢ* der Zellen (535) niedriger als die Endtemperatur *T_{F}* ist, Durchführen des Schritts D;
D. Einschalten (140), für die mindestens eine der einen oder der mehreren Anordnungen, auf Befehl der Steuereinheit (550) an die Betätigungsmittel (538), der Heizmittel (536) einer Anzahl *Nₚ* ≥ 1 der *N'* Zellen, wobei *Nₚ < N',* wobei die *Nₚ* Zellen so ermittelt werden, dass:
- die Heizmittel der *Nₚ* Zellen eine Gesamtleistung entwickeln, die nicht größer ist als die maximale Leistung *P_{MAX}* von Schritt A;
- die *Nₚ* Zellen Temperaturen *Tᵢ* aufweisen, die niedriger sind als die Endtemperatur *T_{F}* unter *den N'* Zellen (535);
E. Ausschalten (140), für die mindestens eine der einen oder der mehreren Anordnungen, auf Befehl der Steuereinheit (550) an die Betätigungsmittel (538), der Heizmittel (536) der *N'-Nₚ* verbleibenden Zellen in Bezug auf Schritt D;
F. erneutes Durchführen (150) von Schritt B auf Befehl der Steuereinheit (550); und
G. Beenden (160), durch die Steuereinheit (550), des Erhitzungsverfahrens (100) der einen oder der mehreren Glasscheiben (510),
wobei:
- in Schritt A eine erste Referenzzelle der *N'* Zellen (535) festgelegt wird, wobei die momentane Temperatur der ersten Referenzzelle als Referenztemperatur *T_{targ}* angenommen wird, und wobei die Heizmittel (536) der ersten Referenzzelle während der Schritte B bis F stets eingeschaltet sind;
- in Schritt C die Temperaturmessungen *Tᵢ* durch die Steuereinheit (550) mit der Referenztemperatur *T_{targ}* verglichen werden und die folgenden Teilschritte durchgeführt werden:
▪ wenn die Temperatur *Tᵢ* jeder Zelle (535) größer oder gleich der Referenztemperatur *T_{targ}* ist und wenn die Referenztemperatur *T_{targ}* größer oder gleich der Endtemperatur *T_{F}* von Schritt A ist, Durchführen des Schritts G; oder
▪ wenn mindestens eine Temperatur *Tᵢ* der Zellen (535) niedriger ist als die Referenztemperatur *T_{targ},* Durchführen des Schritts D;
- in Schritt D die *Nₚ* Zellen so ermittelt werden, dass:
▪ die Heizmittel der *Nₚ* Zellen eine Gesamtleistung liefern, die nicht größer ist als die maximale Leistung *P_{MAX}* von Schritt A;
▪ die *Nₚ* Zellen Temperaturen *Tᵢ* aufweisen, die niedriger sind als die Referenztemperatur *T_{targ}* unter den *N'* Zellen (535),
und wobei eine zweite Referenzzelle mit einer Referenztemperatur *T_{targ2}* festgelegt wird, wobei die Heizmittel (536) der zweiten Referenzzelle während der Schritte B bis F stets eingeschaltet sind und wobei in Schritt C die Temperaturmessungen *Tᵢ* mit *T_{targ}* und *T_{targ2}* basierend auf einer Näherungsunterteilung verglichen werden und die *Nₚ* Zellen sich aus dem Gesamtvergleich ergeben oder mit einem Durchschnitt der Temperaturen *T_{targ}* und *T_{targ2}* verglichen werden.

2. Verfahren nach Anspruch 1, wobei eine einzige Heiz- und Überwachungsanordnung (530) verwendet wird.

3. Verfahren nach Anspruch 1 oder 2, wobei zwei Heiz- und Überwachungsanordnungen (530) verwendet werden, die gegenüber der ersten bzw. der zweiten Fläche der Glasscheibe angeordnet sind, wobei die Schritte B bis F an mindestens einer der beiden Heiz- und Überwachungsanordnungen (530) durchgeführt werden.

4. Verfahren nach Anspruch 3, wobei die Schritte B bis F gleichzeitig an beiden der zwei Heiz- und Überwachungsanordnungen (530) durchgeführt werden.

5. Verfahren nach einem oder mehreren der Ansprüche 1 bis 4, wobei das Zeitintervall zwischen dem Beginn von Schritt B und dem Ende von Schritt E eine vorgegebene Zykluszeit ist.

6. Verfahren nach einem oder mehreren der Ansprüche 1 bis 5, wobei die *N*' Zellen die zusammenhängenden Zellen umfassen, die die Oberfläche des Glases abdecken.

7. Verfahren nach einem oder mehreren der Ansprüche 1 bis 6, wobei *N'=N.*

8. Verfahren nach einem oder mehreren der Ansprüche 1 bis 7, wobei jede *i*-te Zelle eine Leistungsreduzierungseinheit aufweist, die so konfiguriert ist, dass sie durch die Steuereinheit (550) betätigt wird und die Einschaltzeit der Heizmittel (536) während des Zeitintervalls zwischen dem Beginn von Schritt B und dem Ende von Schritt E auf einen Prozentsatz *TPᵢ* reduziert, und wobei die *Nₚ* Zellen und die Prozentsätze *TPᵢ* innerhalb von Zeitintervallen ermittelt werden, die den folgenden Bedingungen entsprechen:
- je höher der Einschaltprozentsatz *TPᵢ,* desto niedriger die Temperatur *Tᵢ* in Bezug auf die Endtemperatur *T_{F}* in der Gruppe von *N'* Zellen (535);
- die Gesamtleistung der *Nₚ* Zellen ist nicht größer als die maximale Leistung *P_{MAX}*; und
- die *Nₚ* Zellen weisen Temperaturen *Tᵢ* auf, die niedriger sind als die Endtemperatur *T_{F}* unter *den N'* Zellen (535).

9. Verfahren nach Anspruch 8, wobei die *Nₚ* Zellen und die Prozentsätze *TPᵢ* außerdem auf Basis einer maximalen Gesamtheizzeit der einen oder der mehreren Glasscheiben ermittelt werden.

10. Einrichtung (500) zum Erhitzen einer oder mehrerer Glasscheiben (510), die einen Ofen zum Erhitzen von Glas umfasst und:
- eine oder mehrere Heiz- und Überwachungsanordnungen (530) der einen oder mehreren Glasscheiben in dem Ofen, wobei jede der einen oder der mehreren Anordnungen (530) gegenüber der ersten oder der zweiten Fläche angeordnet ist und *N* Zellen (535) umfasst, wobei *N* eine Ganzzahl größer oder gleich zwei ist, wobei jede Zelle (535) der *N* Zellen Heizmittel (536), mindestens einen Temperatursensor (537), der so positioniert ist, dass sich der Temperatursensor nahe der einen oder der mehreren Glasscheiben befindet, wenn sich die Glasscheibe in einer Position befindet, die der Zelle entspricht, sowie Betätigungsmittel (538) der Heizmittel umfasst;
- eine Steuereinheit (550), die mit der einen oder den mehreren Heiz- und Überwachungsanordnungen (530) verbunden ist, zum Steuern und Überwachen des Erhitzens jeder der *N* Zellen (535) einer jeden der einen oder der mehreren Anordnungen (530);
wobei die Einrichtung **dadurch gekennzeichnet ist, dass** die Steuereinheit konfiguriert ist, um die Schritte A bis G nach einem oder mehreren der Ansprüche 1 bis 9 durchzuführen.

## Revendications

1. Procédé (100) de chauffage d'une ou plusieurs feuilles de verre (510) présentant une première face et une seconde face, en regard de ladite première face, dans un four de chauffage de verre, comprenant l'utilisation de :
- un ou plusieurs réseaux de chauffage et de surveillance (530) de la ou des feuilles de verre dans ledit four, chacun du ou des réseaux (530) étant placé face à ladite première ou à ladite seconde face et comprenant *N* cellules (535), *N* étant un entier supérieur ou égal à deux, dans lequel chaque cellule (535) des *N* cellules comprend des moyens de chauffage (536), au moins un capteur de température (537) positionné de telle sorte que, lorsque la feuille de verre est dans une position correspondant à ladite cellule, le capteur de température soit proche de ladite ou desdites feuilles de verre, et des moyens d'actionnement (538) des moyens de chauffage également ;
- une unité de commande (550) connectée auxdits un ou plusieurs réseaux de chauffage et de surveillance (530) pour commander et surveiller le chauffage de chacune desdites *N* cellules (535) de chacun du ou des réseaux (530) ;
**caractérisé en ce qu'**il comprend la réalisation des étapes suivantes :
A. réglage (110), au moyen de l'unité de commande (550) :
- d'une température finale *T_{F}* pour chauffer la ou les feuilles de verre (510) ;
- d'une valeur de puissance maximale *P_{MAX}* à fournir globalement au(x) réseau(x) (530) ;
- d'un certain nombre de cellules *N'* à surveiller parmi lesdites *N* cellules, les *N*' cellules comprenant au moins un certain nombre de cellules qui recouvrent lesdites une ou plusieurs feuilles de verre ;
B. acquisition (120), par l'unité de commande (550), pour au moins un réseau parmi le ou les réseaux, d'une mesure de température *Tᵢ* provenant dudit au moins un capteur de température (537) de la i-ème cellule pour *i* = 1,..., *N',* qui se trouve instantanément devant lesdites une ou plusieurs feuilles de verre ;
C. comparaison (130), par l'unité de commande (550), des mesures de température *Tᵢ* de l'étape B avec la température finale *T_{F}* de l'étape A et réalisation des sous-étapes suivantes :
- si la température *Tᵢ* de chaque cellule (535) est supérieure ou égale à la température finale *T_{F},* réalisation de l'étape G ; ou
- si au moins une température *Tᵢ* des cellules (535) est inférieure à la température finale *T_{F},* réalisation de l'étape D ;
D. mise en marche (140), pour ledit au moins un réseau parmi le ou les réseaux, sur instruction de l'unité de commande (550) auxdits moyens d'actionnement (538), des moyens de chauffage (536) d'un certain nombre *Nₚ* ≥ 1 desdites *N'* cellules, *Nₚ < N',* les *Nₚ* cellules étant déterminées de telle sorte que :
- les moyens de chauffage des *Nₚ* cellules développent une puissance globale qui n'est pas supérieure à la puissance maximale *P_{MAX}* de l'étape A ;
- les *Nₚ* cellules ont des températures *Tᵢ* inférieures à la température finale *T_{F}* parmi les *N*' cellules (535) ;
E. mise hors tension (140), pour ledit au moins un réseau parmi le ou les réseaux, sur instruction de l'unité de commande (550) auxdits moyens d'actionnement (538), des moyens de chauffage (536) des *N'-Nₚ* cellules restantes par rapport à l'étape D ;
F. réalisation (150) à nouveau de l'étape B sur instruction de l'unité de commande (550) ; et
G. achèvement (160), par l'unité de commande (550), du procédé de chauffage (100) de la ou des feuilles de verre (510),
dans lequel :
- à l'étape A, une première cellule de référence desdites *N*' cellules (535) est définie, dans lequel la température instantanée de la première cellule de référence est considérée comme température de référence *T_{targ}* et dans lequel lesdits moyens de chauffage (536) de la première cellule de référence sont toujours allumés pendant les étapes B-F ;
- à l'étape C, les mesures de température *Tᵢ* sont comparées par l'unité de commande (550) à la température de référence *T_{targ}* et les sous-étapes suivantes sont réalisées :
▪ si la température *Tᵢ* de chaque cellule (535) est supérieure ou égale à la température de référence *T_{targ}* et si la température de référence *T_{targ}* est supérieure ou égale à la température finale *T_{F}* de l'étape A, réalisation de l'étape G ; ou
▪ si au moins une température *Tᵢ* des cellules (535) est inférieure à la température de référence *T_{targ},* réalisation de l'étape D ;
- à l'étape D, lesdites *Nₚ* cellules sont déterminées de telle sorte que :
▪ les moyens de chauffage des *Nₚ* cellules fournissent une puissance globale qui n'est pas supérieure à la puissance maximale *P_{MAX}* de l'étape A ;
▪ les *Nₚ* cellules ont des températures *Tᵢ* inférieures à la température de référence *T_{targ}* parmi les *N*' cellules (535),
et dans lequel une seconde cellule de référence avec une température de référence *T_{targ2}* est définie, dans lequel lesdits moyens de chauffage (536) de la seconde cellule de référence sont toujours allumés pendant les étapes B-F, et dans lequel, à l'étape C, les mesures de température *Tᵢ* sont comparées à *T_{targ}* et *T_{targ2}* en fonction d'une subdivision de proximité et les *Nₚ* cellules émergent de la comparaison globale ou sont comparées à une moyenne des températures *T_{targ}* et *T_{targ2}.*

2. Procédé selon la revendication 1, dans lequel un seul réseau de chauffage et de surveillance (530) est utilisé.

3. Procédé selon la revendication 1 ou 2, dans lequel deux réseaux de chauffage et de surveillance (530) sont utilisés, disposés respectivement en regard de ladite première face et de ladite seconde face de la feuille de verre, dans lequel les étapes B-F sont réalisées sur au moins un réseau desdits deux réseaux de chauffage et de surveillance (530).

4. Procédé selon la revendication 3, dans lequel les étapes B-F sont réalisées simultanément sur lesdits deux réseaux de chauffage et de surveillance (530).

5. Procédé selon une ou plusieurs des revendications 1 à 4, dans lequel l'intervalle de temps entre le début de l'étape B et la fin de l'étape E est un temps de cycle prédéterminé.

6. Procédé selon une ou plusieurs des revendications 1 à 5, dans lequel les *N*' cellules comprennent les cellules contiguës qui recouvrent la surface du verre.

7. Procédé selon une ou plusieurs des revendications 1 à 6, dans lequel *N'=N.*

8. Procédé selon une ou plusieurs des revendications 1 à 7, dans lequel chaque i-ème cellule comprend un réducteur de puissance conçu pour être actionné par l'unité de commande (550) et pour réduire le temps de mise en marche des moyens de chauffage (536) à un pourcentage *TPᵢ* pendant l'intervalle de temps entre le début de l'étape B et la fin de l'étape E, et dans lequel les *Nₚ* cellules et les pourcentages *TPᵢ* sont déterminés dans des intervalles correspondant aux conditions suivantes :
- plus le pourcentage de mise en marche *TPᵢ* est élevé, plus la température *Tᵢ* est basse par rapport à la température finale *T_{F}* dans le groupe de *N'* cellules (535) ;
- la puissance globale des *Nₚ* cellules n'est pas supérieure à la puissance maximale *P_{MAX}* ; et
- les *Nₚ* cellules ont des températures *Tᵢ* inférieures à la température finale *T_{F}* parmi les *N*' cellules (535).

9. Procédé selon la revendication 8, dans lequel les *Nₚ* cellules et les pourcentages *TPᵢ* sont également déterminés sur la base d'un temps de chauffage global maximal de la ou des feuilles de verre.

10. Appareil (500) de chauffage d'une ou plusieurs feuilles de verre (510), comprenant un four de chauffage de verre et :
- un ou plusieurs réseaux de chauffage et de surveillance (530) de la ou des feuilles de verre dans ledit four, chacun du ou des réseaux (530) étant placé face à ladite première face ou à ladite seconde face et comprenant *N* cellules (535), *N* étant un entier supérieur ou égal à deux, dans lequel chaque cellule (535) des *N* cellules comprend des moyens de chauffage (536), au moins un capteur de température (537) positionné de telle sorte que, lorsque la feuille de verre est dans une position correspondant à ladite cellule, le capteur de température soit proche de ladite une ou plusieurs feuilles de verre, et des moyens d'actionnement (538) des moyens de chauffage également ;
- une unité de commande (550) connectée auxdits un ou plusieurs réseaux de chauffage et de surveillance (530) pour commander et surveiller le chauffage de chacune desdites *N* cellules (535) de chacun du ou des réseaux (530) ;
l'appareil étant **caractérisé en ce que** l'unité de commande est configurée pour réaliser les étapes A à G selon une ou plusieurs des revendications 1 à 9.
